# EUROPÄISCHE PATENTSCHRIFT

(11) **EP 0 780 252 B1**
(45) Veröffentlichungstag und Bekanntmachung des Hinweises auf die Patenterteilung: **31.03.2004**
(21) Anmeldenummer: 96120556.4
(22) Anmeldetag: 20.12.1996
(51) Int. Cl.: B60H 1/00

(54) **Mittels einer Fernwirkanlage aktivierbare Zusatzeinrichtung eines Fahrzeugs**
Vehicle auxiliary equipment activatable with a remote control
Equipement auxiliaire de véhicule activable avec une télécommande

(30) Priorität: 23.12.1995 DE 19548548
(43) Veröffentlichungstag der Anmeldung: 25.06.1997
(73) Patentinhaber: WEBASTO THERMOSYSTEME GmbH, D-82131 Stockdorf (DE)
(72) Erfinder: Harings, Roland, 82110 Germering (DE); Landgraf, Hans-Peter, 82131 Gauting (DE); Leucht, Rainer, 73666 Baltmannsweiler (DE); Stotz, Manfred, 73773 Aichwald (DE); Hilpert, Wolfgang, 70619 Stuttgart (DE)
(74) Vertreter: Wiese, Gerhard

(56) Entgegenhaltungen:
- DE-A- 3 609 098
- DE-A- 4 215 221
- DE-C- 4 315 379
- GB-A- 2 225 131
- US-A- 4 843 384

## Beschreibung

Die Erfindung betrifft eine mittels einer Femwirkanlage aktivierbare Zusatzeinrichtung eines Fahrzeugs, wie ein Zusatzheizgerät, mit einem im Fahrzeug installierten Empfänger, der mit einem mobilen Sender in eine signalübertragende Verbindung bringbar ist.

Aus der DE 43 15 379 C1 ist ein Heizsystem eines Fahrzeugs bekannt, bei dem ein motorunabhängiges Zusatzheizgerät zum einen mittels einer einen Sender und einen Empfänger umfassenden Fernwirkanlage, und zum anderen mittels einer im Fahrzeug angeordneten, als Vorwahluhr ausgebildeten zeitprogrammierbaren Einrichtung aktivierbar ist. Das gleichzeitige Vorsehen einer Femwirkanlage und einer Vorwahluhr steigert zwar den Bedienungskomfort einer derartigen Fahrzeugzusatzeinrichtung, da der Bediener zum einen eine oder mehrere Startzeiten über die Vorwahluhr programmieren kann und zum anderen über den Sender über eine größere Distanz zum Fahrzeug unmittelbar Start- bzw. Stoppbefehle übertragen kann. Gleichzeitig erhöht das parallele Vorhandensein der Vorwahluhr und der Femwirkanlage jedoch die Kosten und vermindert somit die Akzeptanz einer derartigen Zusatzeinrichtung.

Aus der DE 36 09 098 A1 ist ein fembedienbares Fahrzeugzusatzheizgerät eines Fahrzeugs bekannt, mit einem mobilen Sender, der mit einem im Fahrzeug installierten Empfänger in Signalverbindung bringbar ist. Der Empfänger steht über einen fahrzeugeigenen Datenbus mit einer Uhr in Verbindung, die ihrerseits mit dem Steuergerät des Fahrzeugzusatzheizgerät in Verbindung steht. Eine Programmierung einer Startzeit für das Fahrzeugzusatzheizgerät am Sender ist dort nicht vorgesehen.

Aus der US 4,843,384 A ist eine Femwirkanlage bekannt, bei der im Sender und/oder im Empfänger eine Uhr integriert ist, die zu einer voreingestellten Startzeit beispielsweise eine Klimaanlage betätigt. Aufgrund der Signalübertragung durch Infrarotstrahlen ist die Vorrichtung nicht zum Fernbetätigen eines Zusatzheizgeräts eines Fahrzeugs geeignet, dadort Entfernungen von 400 m bis zu 1000 m überbrückt werden müssen. Die Entgegenhaltung bezieht sich somit auf eine Betätigungseinrichtung für eine stationäre Klimaanlage in einem Gebäude. Der Empfänger steht dabei fest verdrahtet mit dem gesteuerten Objekt in Verbindung.

Der vorliegenden Erfindung liegt die Aufgabe zugrunde, eine mittels einer Fernwirkanlage aktivierbare Zusatzeinrichtung eines Fahrzeugs zu schaffen, bei der ohne eine Einbuße an Bedienungskomfort eine separate Vorwahluhr im Fahrzeug eingespart werden kann.

Diese Aufgabe wird gemäß der vorliegenden Erfindung durch die im Patentanspruch 1 angegebenen Merkmale gelöst. Vorteilhafte Ausgestaltungen der Erfindung sind den Unteransprüchen zu entnehmen.

Erfindungsgemäß ist vorgesehen, daß der Sender zumindestens als Eingabeeinheit für die zeitprogrammierbare Einrichtung dient und über entsprechende Bedienelemente zur Programmierung wenigstens eines Startzeitwertes T_{SOLL} verfügt. Hierdurch wird der Eingabeteil einer bislang im Cockpit des Fahrzeuges unterzubringenden Vorwahluhr mit mehreren Tasten und einem Display nunmehr auf den Sender übernommen, sodaß der Einbau der Vorwahluhr im Fahrzeug entfällt und deren Platz im Cockpit für andere Bedienelemente und/oder Anzeigeeinrichtungen zur Verfügung steht.

Gemäß einer besonders vorteilhaften Ausgestaltung der Erfindung ist vorgesehen, daß der Sender nur als Eingabeeinheit mit wenigstens einem Speicher dient und daß im Fahrzeug ein zusätzlicher Speicher vorgesehen ist, in den ein am Sender eingegebener und in dessen Speicher gespeicherten Startzeitwert T_{SOLL} mittels des Senders und des Empfängers femübertragen wird, welcher Startzeitwert T_{SOLL} von einer im Fahrzeug vorgesehenen Steuereinheit mit einem aktuellen Zeitwert T_{IST} verglichen wird und bei festgestellter Übereinstimmung T_{SOLL} = T_{IST} zur einer Aktivierung der Zusatzeinrichtung ftihrt. Bei dieser Ausführungsform wird die Vorwahlzeit am Sender programmiert und unmittelbar danach durch einen Femübertragungsvorgang auf den Empfänger im Fahrzeug übertragen. Die Auswertung der voreingestellten Startzeit durch Abgleich mit einer Uhr sowie das Auslösen des Startbefehls für die Zusatzeinrichtung erfolgt im Fahrzeug selbst.

Hierbei ist es besonders vorteilhaft, dass als Steuereinheit ein fahrzeugeigener Bordcomputer verwendet wird. Dieser speichert in einem integrierten Speicher den einen oder die mehreren vom Sender an den Empfänger übermittelten Startzeitwerte.

Bei dieser Ausführungsform ist es ferner vorteilhaft, wenn der aktuelle Zeitwert von einer fahrzeugeigenen Uhr oder einem mit einer Uhrfunktion ausgestatteten Kombiinstrument bereitgestellt wird. Eine derartige Uhr ist bei Fahrzeugen der gehobenen Leistungsklasse Standardausstattung und eine solche Uhr oder ein solches Kombiinstrument steht auch in aller Regel in Verbindung mit einem Bordcomputer, sodaß fahrzeugseitig kein Zusatzaufwand erforderlich ist.

Alternativ zu dieser ersten Ausführungsform wird bei einer zweiten Ausführungsform der aktuelle Zeitwert von einer in den Sender integrierten Uhr bereitgestellt, und der Vergleich einer über die Eingabeeinheit in einen am Sender vorgesehenen Speicher eingegebenen Startzeit mit dem aktuellen Zeitwert erfolgt durch eine im Sender angeordnete Auswertelogik. Der Sender gibt in diesem Fall bei festgestellter Übereinstimmung von voreingestellter Startzeit und aktuellem Zeitwert ein Startsignal an den Empfänger ab. Vorteilhaft bei dieser zweiten Variante ist, daß sie sich auch für einen nachträglichen Einbau in Fahrzeuge eignet.

Um Batteriekapazität im Sender zu sparen, kann der Vergleich von voreingestellter Startzeit und aktuellem Zeitwert in Intervallen mit größeren dazwischenliegenden Pausezeiten erfolgen. So kann beispielsweise bei einem Verzicht auf eine minutengenaue Startzeit in 5 oder gar 10minütigen Intervallen ein kurzzeitiges Einschalten der Auswertelogik erfolgen, auf das sich eine annähernd 5 oder 10minütige Pausezeit anschließt. Die Batteriekapazität des Senders kann ferner dadurch geschont werden, daß nach Auslösen des Startsignals durch den Sender ein selbsttätiges Abschalten der Auswertelogik erfolgt.

Unabhängig davon, ob die Uhrenfunktion und die Auswertelogik im Sender oder im Fahrzeug angeordnet sind, ist vorgesehen, daß als Signalleitung zwischen Empfänger, Steuereinheit, Zusatzeinrichtung und gegebenenfalls der Uhr oder dem Kombiinstrument ein fahrzeugeigener Datenbus verwendet wird, wie dies prinzipiell bereits aus der DE 36 09 098 C2 oder der DE 42 15 221 C2 bekannt ist.

Zur Erhöhung des Bedienungskomforts ist es vorteilhaft, wenn der im Sender vorgesehene Speicher zur Speicherung mehrerer möglicher Startzeitwerte ausgelegt ist, die durch Blättern mittels einer Programmtaste abrufbar sind. Durch eine derartige Ausgestaltung kann der Bediener entsprechend seinem individuellen Wochenprogramm mehrere Startzeiten für die Zusatzeinrichtung festlegen, die nicht jedesmal verändert werden müssen.

Schließlich ist es vorteilhaft, wenn im Fahrzeug ein einfacher Bedienschalter zur Aktivierung bzw. Deaktivierung der Zusatzeinrichtung angeordnet ist. Ein solcher Bedienschalter ermöglicht einen Betrieb der Zusatzeinrichtung auch dann, wenn der Bediener den Sender vergessen oder verlegt hat.

Nachfolgend sind Ausführungsbeispiele der Erfindung anhand der Zeichnung beschrieben.
Es zeigt:
- Fig. 1: eine schematischen Darstellung einer Zusatzeinrichtung mit einer Femwirkanlage,
- Fig. 2: einen Sender mit abgedecktem Bedienteil,
- Fig. 3: einen Sender mit freigelegtem Bedienteil,
- Fig. 4: einen Notbedienschalter und
- Fig. 5: eine Zusatzeinrichtung, die über eine Femwirkanlage und einen Bordcomputer betätigbar ist.

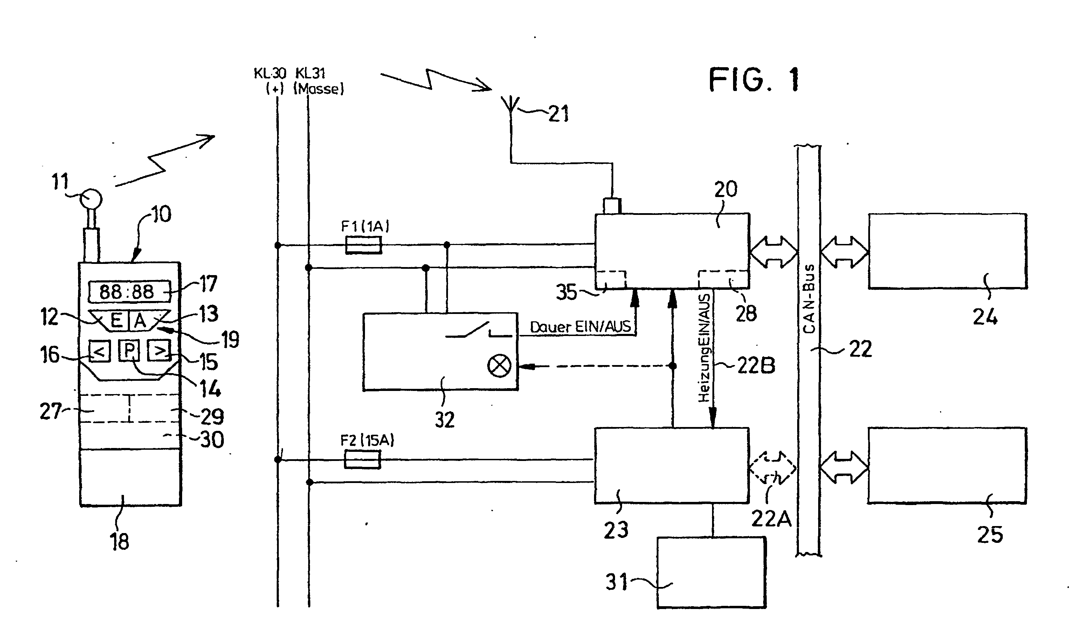

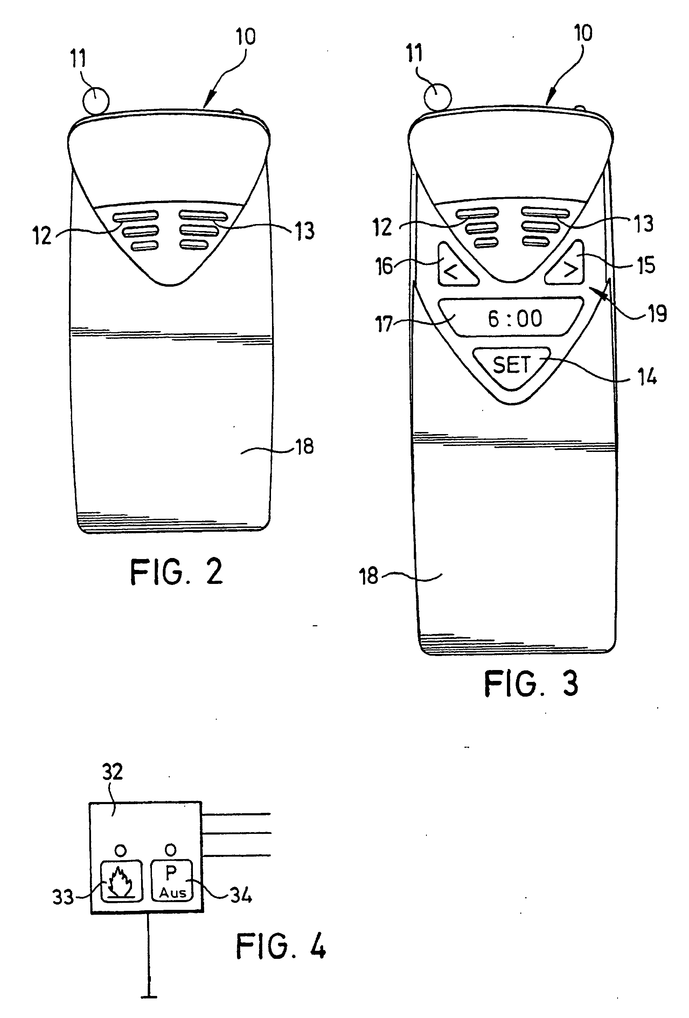

In Fig. 1 ist ein mobiler Sender 10 dargestellt, der Ober eine Antenne 11 mit einer Antenne 21 in einem nicht dargestellten Fahrzeug in Verbindung steht. Vorteilhafterweise erfolgt die Verbindung zwischen den Antennen 11 und 21 mittels einer Hochfrequenz-Funkübertragung. Der Sender 10 umfaßt für die Bedienung insgesamt fünf Tasten und ein Display 17, welche zusammenfassend als Eingabeeinheit 19 bezeichnet werden. Die Eingabeeinheit 19 umfaßt eine Einschalttaste 12, eine Ausschalttaste 13, eine Programmtaste 14, eine Vorlauftaste 15 und eine Rücklauftaste 16. Wie in den Fign. 2 und 3 dargestellt, ist die Eingabeeinheit 19 mittels eines Schiebedeckels 18 zumindestens teilweise abdeckbar. Vorzugsweise bleiben die Einschalttaste 12 und die Ausschalttaste 13 auch bei geschlossenem Schiebedeckel 18 im Zugriff eines Bedieners.

Der Empfänger 20 steht über einen fahrzeugeigenen Datenbus 22 mit einem Steuergerät 23 in Verbindung, welches seinerseits zur Ansteuerung einer im vorliegenden Falle als Zusatzheizgerät 31 ausgebildeten Fahrzeug-Zusatzeinrichtung dient. Über den Datenbus 22 stehen ferner ein mit einer Uhr ausgestattetes Kombiinstrument 24 und ein Steuergerät 25 einer Klimaautomatik mit dem Steuergerät 23 in Verbindung.

Bei der in Fig. 1 dargestellten Ausführungsform weist der Sender 10 einen integrierten Speicherbaustein 27 auf, in den eine oder mehrere mittels der Programmtaste 14 und der Vorlauftaste 15 bzw. der Rücklauftaste 16 eingebbare Startzeitwerte T_{SOLL} speicherbar sind. Die Eingabe erfolgt durch Drücken der Programmtaste 14, wobei im Display 17 eine erste Startzeit T_{SOLL1} angezeigt wird. Der angezeigte erste Startzeitwert T_{SOLL1} kann nun bei Betätigung der Vorlauftaste 15 oder der Rücklauftaste 16 innerhalb einer bestimmten Zeit von beispielsweise 5 Sekunden durch Vorlauf oder Rücklauf verändert werden. Vorlauftaste 15 und Rücklauftaste 16 verändern die Zeit zunächst langsam und bei längerem Drücken zunehmend schneller. Erfolgt für eine bestimmte Zeit von beispielsweise 5 Sekunden keine Betätigung der Vorlauftasten 15 bzw. Rücklauftasten 16 mehr, so wird die im Display angezeigte Zeit als neuer Startzeitwert T_{SOLL1} in den Speicher 27 übertragen. Durch Drücken der Programmtaste 14 können auf diese Weise verschiedene Startzeitwerte T_{SOLL2}, T_{SOLL3} usw. eingegeben werden. Dabei wird immer die zuletzt im Display angezeigte Zeit als aktivierter Startzeitwert in den Speicher 27 gelegt. Der Sender 10 im Ausführungsbeispiel gemäß Fig. 1 ist ferner mit einer Uhr 29 sowie einer Auswertelogik 30 ausgestattet, welche kontinuierlich oder in vorbestimmten Intervallen einen Vergleich des aktivierten Startzeitwertes T_{SOLL} mit dem von der Uhr 29 abgegebenen aktuellen Zeitwert T_{IST} durchführt und bei festgestellter Übereinstimmung beider Zeitwerte T_{SOLL} = T_{IST} einen Startbefehl an den Empfänger 20 sendet.

Alternativ dazu kann der Sender 10 auch nur zum Einstellen eines Startzeitwertes über die Eingabeeinheit 19 dienen, welcher Startzeitwert T_{SOLL} beispielsweise durch Betätigen der Einschalttaste 12 nach Beendigung des Einstellvorgangs unmittelbar an den Empfänger 20 in einen dort vorgesehenen Speicher 28 übertragen wird. Die Auswertelogik kann in diesem Fall in den Empfänger 20 oder in das Steuergerät 23 des Zusatzheizgeräts 31 integriert sein. Die für den SOLL-IST-Wert-Vergleich erforderliche aktuelle Zeit wird dabei vorteilhaft von einem im Fahrzeug vorhandenen Kombiinstrument 24 über einen Datenbus 22 der Auswertlogik im Empfänger 20 oder dem Steuergerät 23 zugeführt.

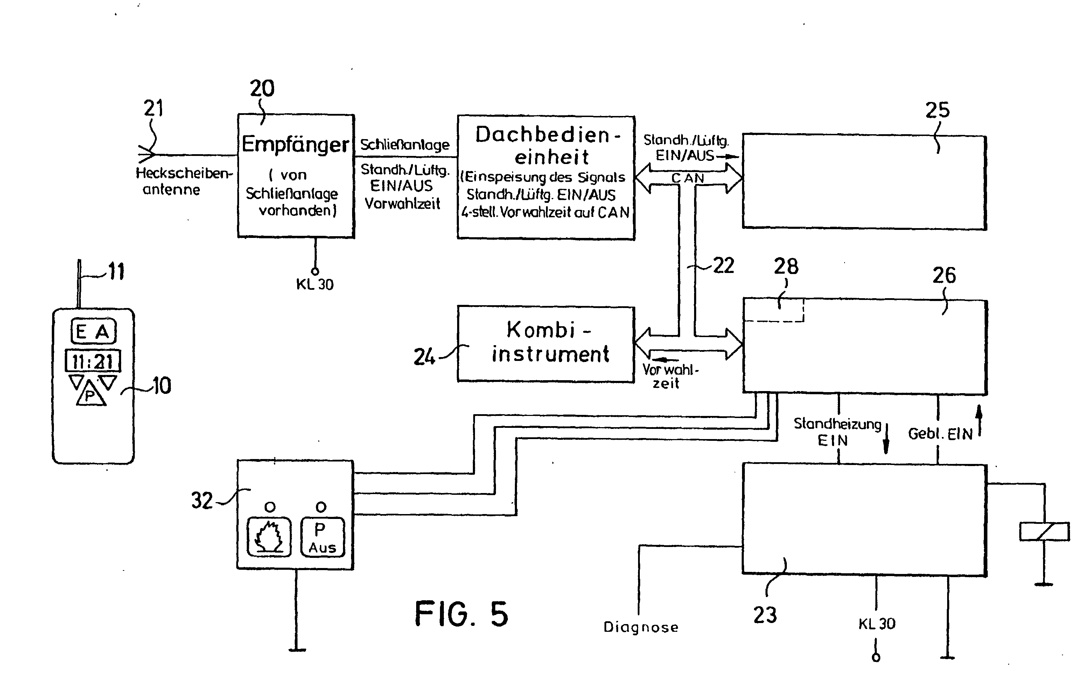

Bei der in Fig. 5 dargestellten Ausführungsform verfügt der Sender 10 über keine Uhr und keine Auswertelogik. Die am Sender 10 durch Blättern mittels der Programmtaste 14 und gegebenenfalls Veränderung mittels der Vorlauftaste 15 oder der Rücklauftaste 16 eingestellte Startzeit T_{SOLL} wird unmittelbar auf den Empfänger 20 übertragen. Der Empfänger 20 überträgt die vorzugsweise vierstellige Vorwahlzeit über einen fahrzeugeigenen Datenbus 22 in einen Speicher 28, der in einem fahrzeugeigenen Bordcomputer 26 vorgesehen ist. Der Bordcomputer 26 steht über dem Datenbus 22 außerdem mit einem Klimasteuergerät 25 sowie einem eine Uhrenfunktion beinhaltenden Kombiinstrument 24 in Verbindung. Der Bordcomputer 26 weist ferner eine Auswertelogik auf, die den im Speicher 28 gespeicherten Startzeitwert T_{SOLL} kontinuierlich oder in Intervallen mit dem vom Kombiinstrument 24 gelieferten aktuellen Zeitwert T_{IST} vergleicht und bei Feststellen der Übereinstimmung T_{SOLL} = T_{IST} gegebenenfalls unter Abprüfen eines vom Klimasteuergerät 25 gelieferten SOLL- und IST-Temperaturwertes einen Befehl zum Starten des Zusatzheizgerätes 31 an dessen Steuergerät 23 abgibt.

Wenn die vom Klimasteuergerät 25 gelieferte Innenraum-Isttemperatur die vorgegebene Solltemperatur übersteigt, erfolgt kein Startbefehl an das Steuergerät 23 des Zusatzheizgeräts 31; alternativ dazu wird vielmehr eine Standentlüftung über einen vom Bordcomputer 26 angesteuerten Lüfter betrieben. Diese Standentlüftung kann durch ein ebenfalls vom Bordcomputer 26 ausgelöstes Ausstellen eines Schiebedachdeckels unterstützt werden.

Um auch dann einen Start der Zusatzeinrichtung zu ermöglichen, wenn der Bedienende den Sender 10 vergessen oder verlegt hat, ist vorzugsweise im Fahrzeug ein im Vergleich zur herkömmlichen Vorwahluhr sehr kleiner Bedienschalter 32 vorgesehen, der lediglich über eine Einschalttaste 33 und eine Ausschalttaste 34 oder alternativ dazu über eine einzige Ein/Ausschalttaste mit Wechselfunktion verfügt.

Als zusätzliches Komfortmerkmal kann vorgesehen sein, daß am Sender 10 nicht nur ein Startzeitwert T_{SOLL} sondern auch eine Laufzeit des Zusatzheizgerätes vorgebbar ist. Der vom Sender an den Empfänger übermittelte Datenblock enthält dann neben dem Codesignal zur Identifizierung und der vierstelligen Vorwahlzeit eine weitere zweistellige Zeitangabe in Minuten, die vom Steuergerät 23 ausgewertet wird.

Bei einer zusätzlichen Variante wird die aktuelle Zeit T_{IST} von einer im Empfänger 20 integrierten Uhr 35 bereitgestellt und der Vergleich der durch den Sender 10 an den Empfänger 20 übermittelten Startzeit T_{SOLL} erfolgt durch eine im Empfänger 20 vorgesehene Auswertelogik. Durch diese Ausführung wäre ein eigenständiges System in Fahrzeugen ohne Datenbus darstellbar.

Gemäß einer besonders vorteilhaften Ausführungsform wird die aktuelle Zeit T_{IST} von einer im Empfänger 20 integrierten Funkuhr 35 bereitgestellt. Dadurch steht immer die exakte Zeit der Braunschweiger Atomuhr zur Verfügung, so daß auch eine automatische Umschaltung von Sommer- auf Winterzeit erfolgt.

Bei Fahrzeugen mit Datenbus 22 ergibt sich durch Einsatz einer Funkuhr 35 im Empfänger 20 der Vorteil, daß über die Vernetzung über den Datenbus die Zeitanzeige im Fahrzeug kontrolliert werden und Stellknöpfe an der Borduhr eingespart werden können.

### Bezugszeichenliste

- 10: Sender
- 11: Antenne
- 12: Einschalttaste
- 13: Ausschalttaste
- 14: Programmtaste
- 15: Vorlauftaste
- 16: Rücklauftaste
- 17: Display
- 18: Schiebedeckel
- 19: Eingabeeinheit
- 20: Empfänger
- 21: Antenne
- 22,22A: Datenbus
- 22B: Signalleitung
- 23: Heizungssteuergerät
- 24: Kombiinstrument
- 25: Klimaautomatik
- 26: Bordcomputer
- 27: Speicher (im Sender 10)
- 28: Speicher (im Fahrzeug)
- 29: Uhr (im Sender 10)
- 30: Auswertelogik (im Sender 10)
- 31: Zusatzheizgerät
- 32: Bedienschalter
- 33: Einschalttaste
- 34: Ausschalttaste
- 35: Uhr (im Empfänger 20)

## Patentansprüche

1. Mittels einer Fernwirkanlage aktivierbare Zusatzeinrichtung eines Fahrzeugs, wie ein Zusatzheizgerät (31), mit einem im Fahrzeug installierten Empfänger (20), der mit einem mobilen Sender (10) in eine signalübertragende Verbindung bringbar ist und der mittels einer Signalleitung (22) mit einem Steuergerät (23) der Zusatzeinrichtung (31) in Verbindung steht, sowie mit einer zeitprogrammierbaren Einrichtung, die zur Aktivierung der Zusatzeinrichtung (31) ebenfalls mit deren Steuergerät (23) in Verbindung steht, wobei der Sender (10) als Eingabeeinheit (19) für die zeitprogrammierbare Einrichtung dient, über entsprechende Bedienelemente (14, 15, 16) zur Programmierung wenigstens eines Startzeitwertes (T_{SOLL}) verfügt und zur Speicherung des Startzeitwerts (T_{SOLL}) wenigstens einen Speicher (27) aufweist, wobei ferner im Fahrzeug ein zusätzlicher Speicher (28) vorgesehen ist, in den ein am Sender (10) eingegebener und in dessen Speicher (27) gespeicherter Startzeitwert (T_{SOLL}) mittels des Senders (10) und des Empfängers (20) fernübertragen wird, welcher Startzeitwert (T_{SOLL}) von einem im Fahrzeug vorgesehenen fahrzeugeigenen Bordcomputer (26) oder von einem Steuergerät (23) der Zusatzeinrichtung (31) oder von einer Auswertelogik (30) im Sender (10) mit einem aktuellen Zeitwert (T_{IST}) verglichen wird und bei festgestellter Übereinstimmung (T_{SOLL} =T_{IST}) zu einer Aktivierung der Zusatzeinrichtung (31) führt, und wobei als Signalleitung zwischen Empfänger (20), Steuereinheiten (23, 26), und Zusatzeinrichtung (31) ein fahrzeugeigener Datenbus (22) verwendet wird.

2. Zusatzeinrichtung nach Anspruch 1, **dadurch gekennzeichnet, daß** der im Fahrzeug vorgesehene Speicher (28) im Bordcomputer (26) integriert ist.

3. Zusatzeinrichtung nach einem der Ansprüche 1 oder 2, **dadurch gekennzeichnet, daß** der aktuelle Zeitwert (T_{IST}) von einer fahrzeugeigenen Uhr oder einem mit einer Uhrfunktion ausgestatteten Kombi-Instrument (24) bereitgestellt wird.

4. Zusatzeinrichtung nach einem der vorhergehenden Ansprüche, **dadurch gekennzeichnet, daß** der Vergleich von T_{SOLL} und T_{IST} in Intervallen mit größeren dazwischenliegenden Pausenzeiten erfolgt.

5. Zusatzeinrichtung nach wenigstens einem der vorhergehenden Ansprüche, **dadurch gekennzeichnet, daß** der im Sender (10) vorgesehene Speicher (27) zur Speicherung mehrerer möglichen Startzeitwerte (T_{SOLL1}, T_{SOLL2}, T_{SOLL3}) ausgelegt ist, die durch Blättern mittels einer Programmtaste (14) abrufbar sind.

6. Zusatzeinrichtung nach einem der vorhergehenden Ansprüche, **dadurch gekennzeichnet, daß** im Fahrzeug ein Bedienschalter (32) zur Aktivierung/Deaktivierung der Zusatzeinrichtung (31) angeordnet ist.

7. Zusatzeinrichtung nach Anspruch 1 oder 2, **dadurch gekennzeichnet, daß** zur Bereitstellung eines aktuellen Zeitwerts (T_{IST}) eine Uhr (35) im Empfänger (20) integriert ist.

8. Zusatzeinrichtung nach einem der Ansprüche 2 bis 7, **dadurch gekennzeichnet, daß** die Istzeit (T_{IST}) von einer Funkuhr (24; 29; 35) bereitgestellt wird.

## Claims

1. Additional vehicle equipment which can be activated by means of a remote control system, such as an additional heater (31 ), comprising a receiver (20) which is installed in the vehicle, with which a signal-transmitting connection can be made to a mobile transmitter (10) and which, by means of a signal line (22), is connected to a controller (23) of the additional equipment (31), and comprising a time-programmable device which, in order to activate the additional equipment (31), is likewise connected to the controller (23) of the latter, the transmitter (10) serving as an input unit (19) for the time-programmable device, having appropriate operating elements (14, 15, 16) for programming at least one starting time value (T_{des}) and having at least one memory (27) for storing the starting time value (T_{des}), an additional memory (28) also being provided in the vehicle, into which memory a starting time value (T_{des}) input at the transmitter (10) and stored in its memory (27) is transmitted remotely by means of the transmitter (10) and the receiver (20), which starting time value (T_{des}) is compared with a current time value (T_{act}) by an on-board computer (26) belonging to the vehicle and provided in the vehicle or by a controller (23) belonging to the additional equipment (31) or by evaluation logic (30) in the transmitter (10) and, if agreement (T_{des} = T_{act}) is determined, leads to activation of the additional equipment (31), and a data bus (22) belonging to the vehicle being used as a signal line between the receiver (20), control units (23, 26) and additional equipment (31).

2. Additional equipment according to Claim 1, **characterized in that** the memory (28) provided in the vehicle is integrated in the on-board computer (26).

3. Additional equipment according to either of Claims 1 and 2, **characterized in that** the current time value (T_{act}) is provided by a clock belonging to the vehicle or a combination instrument (24) equipped with a clock function.

4. Additional equipment according to one of the preceding claims, **characterized in that** the comparison between T_{des} and T_{act} is carried out at intervals with longer pause times in between.

5. Additional equipment according to at least one of the preceding claims, **characterized in that** the memory (27) provided in the transmitter (10) is designed for the storage of a plurality of possible starting time values (T_{des1}, T_{des2}, T_{des3}), which can be called up by scrolling by means of a program key (14).

6. Additional equipment according to one of the preceding claims, **characterized in that** an operating switch (32) for activating/deactivating the additional equipment (31) is arranged in the vehicle.

7. Additional equipment according to Claim 1 or 2, **characterized in that**, in order to provide a current time value (T_{act}), a clock (35) is integrated in the receiver (20).

8. Additional equipment according to one of Claims 2 to 7, **characterized in that** the actual time (T_{act}) is provided by a radio clock (24; 29; 35).

## Revendications

1. Equipement auxiliaire de véhicule activable avec une télécommande, comme un appareil de chauffage auxiliaire (31), comprenant un récepteur (20) installé dans le véhicule qui peut être mis en communication avec un émetteur mobile (10) en vue de la transmission de signaux et qui est en communication avec un appareil de commande (23) de l'équipement auxiliaire (31) par une ligne de signaux (22), ainsi qu'un dispositif à programmation horaire qui, pour l'activation de l'équipement auxiliaire (31), est également en communication avec son appareil de commande (23), l'émetteur (10) servant d'unité d'entrée (19) pour le dispositif à programmation horaire, disposant d'organes de commande appropriés (14, 15, 16) pour la programmation d'au moins une valeur de temps de départ (T_{SOLL}) et présentant au moins une mémoire (27) pour la mémorisation de la valeur de temps de départ (T_{SOLL}), une mémoire supplémentaire (28) étant en outre prévue dans le véhicule, dans laquelle une valeur de temps de départ (T_{SOLL}) entrée à l'émetteur (10) et mémorisée dans sa mémoire (27) est transmise à distance au moyen de l'émetteur (10) et du récepteur (20), laquelle valeur de temps de départ (T_{SOLL}) est comparée avec une valeur de temps actuelle (T_{IST}) par un ordinateur de bord (26) propre au véhicule, prévu dans ce dernier, ou par un appareil de commande (23) de l'équipement auxiliaire (31) ou par une logique d'évaluation (30) dans l'émetteur (10) et, en cas de coïncidence constatée (T_{SOLL} = T_{IST}), entraîne une activation de l'équipement auxiliaire (31), un bus de données (22) propre au véhicule étant utilisé comme ligne de signaux entre le récepteur (20), les unités de commande (23, 26) et l'équipement auxiliaire (31).

2. Equipement auxiliaire selon la revendication 1, **caractérisé par le fait que** la mémoire (28) prévue dans le véhicule est intégrée dans l'ordinateur de bord (26).

3. Equipement auxiliaire selon l'une des revendications 1 ou 2, **caractérisé par le fait que** la valeur de temps actuelle (T_{IST}) est fournie par une horloge propre au véhicule ou par un combiné d'instruments (24) équipé d'une fonction d'horloge.

4. Equipement auxiliaire selon l'une des revendications précédentes, **caractérisé par le fait que** la comparaison de T_{SOLL} et T_{IST} est effectuée à intervalles avec des temps de pause intermédiaires plus grands.

5. Equipement auxiliaire selon au moins l'une des revendications précédentes, **caractérisé par le fait que** la mémoire (27) prévue dans l'émetteur (10) est conçue pour la mémorisation de plusieurs valeurs de temps de départ (T_{SOLL1}, T_{SOLL2}, T_{SOLL3}) possibles, pouvant être appelées par défilement au moyen d'une touche de programme (14).

6. Equipement auxiliaire selon l'une des revendications précédentes, **caractérisé par le fait qu'**un commutateur de commande (32) pour l'activation/la désactivation de l'équipement auxiliaire (31) est placé dans le véhicule.

7. Equipement auxiliaire selon la revendication 1 ou 2, **caractérisé par le fait qu'**une horloge (35) est intégrée dans le récepteur (20) pour la fourniture de la valeur de temps actuelle (T_{IST}).

8. Equipement auxiliaire selon l'une des revendications 2 à 7, **caractérisé par le fait que** le temps réel (T_{IST}) est fourni par une horloge radiopilotée (24 ; 29 ; 35).
